# EUROPEAN PATENT APPLICATION

(11) **EP 4 838 267 A1**
(43) Date of publication of application: **11.11.2026**
(21) Application number: 25174139.3
(22) Date of filing: 05.05.2025
(51) Int. Cl.: G01W 1/02, F21V 23/04, H05B 47/105, G08G 1/01, G08G 1/0967, G01W 1/00

(54) **LIGHTING INFRASTRUCTURE SYSTEM**

(71) Applicant: Tridonic GmbH & Co. KG, 6851 Dornbirn (AT)
(72) Inventor: Netzer, Harald, 6851 Dornbirn (AT)
(74) Representative: Rupp, Christian

(57) **Abstract**

The invention relates to a lighting infrastructure system (10) comprising a plurality of outdoor luminaires (11) which are arranged distributed over a geographical area, in particular an urban and/or a rural area, and a central unit (15). Each of the plurality of outdoor luminaires (11) comprises: at least one sensor (12) configured to sense one or more weather and/or environmental conditions, and a communication interface (13) configured to transmit data representing the one or more sensed weather and/or environmental conditions to the central unit (15).

## Description

### TECHNICAL FIELD OF THE INVENTION

The present invention relates generally to the fields of lighting technology and environmental sensing. More specifically, the invention relates to a lighting infrastructure system capable of sensing weather and/or environmental conditions in a geographical area and to a method for operating a lighting infrastructure system.

### BACKGROUND OF THE INVENTION

It is known to use weather stations to measure and record atmospheric conditions. For instance, a weather station includes a plurality of meteorological sensors, such as thermometers or hygrometers. It is further known to measure environmental conditions, such as particulate matter or noise pollution, with dedicated measurement stations.

However, such weather or environmental measurement stations are often only sporadically arranged in an extended area, e.g. a city or larger region, and are not arranged in a close mesh. Thus, the data is only recorded for a few places in the area. Further, the measurement stations are often standalone units which do not communicate the collected data with each other or with other devices so that the collected data is only available locally at the stations.

### SUMMARY OF THE INVENTION

In view of the above, it is an object of the invention to overcome the above-mentioned drawbacks and disadvantages. In particular, it is an object to efficiently monitor weather and/or environmental conditions over a wide area.

The foregoing and other objects are achieved by the features of the enclosed independent claims. Advantageous implementations of the present invention are further defined in the dependent claims.

According to a first aspect, the invention relates to a lighting infrastructure system comprising a plurality of outdoor luminaires which are arranged distributed over a geographical area, in particular an urban and/or a rural area, and a central unit. Each of the plurality of outdoor luminaires comprises at least one sensor configured to sense one or more weather and/or environmental conditions, and a communication interface configured to transmit data representing the one or more sensed weather and/or environmental conditions to the central unit.

This achieves the advantage that a dense network of sensors for monitoring weather and/or environmental conditions in the geographical area is provided. By means of this sensor network, the weather and/or environmental conditions can be measured with high local resolution.

The outdoor luminaires can be arranged in a grid across the geographical area.

For instance, the outdoor luminaires are streetlights. This achieves the advantage that a network of streetlights, typically only used for illuminating streets and other paths in the geographical area, can double as a tight-meshed sensor network for weather and/or environmental monitoring.

For instance, the outdoor luminaire is an LED based luminaire which comprises one or more LED modules and an LED driver and/or converter for supplying the LED module(s).

The data transmitted to the control unit can comprise the raw sensor data collected by the at least one sensor, or can comprise data, which is based on the raw sensor data, and which was further processed in the luminaire, e.g., by a microcontroller in the luminaire.

For example, the central unit is configured to receive and process the data from the plurality of outdoor luminaires.

The central unit can be a central computing device, such as a server, and/or a central controller.

In an implementation form, the one or more weather conditions comprise: a current temperature, a temperature cycle, a humidity, an air pressure, a wind speed, and/or a certain weather phenomenon, in particular rain, snow or hail.

In an implementation form, the one or more environmental conditions comprise: a particulate matter pollution, in particular a fine dust pollution, an audible noise level, an NO₂ concentration, and/or a CO₂ concentration.

In an implementation form, the at least one sensor comprises: a temperature sensor, a humidity sensor (e.g., a hygrometer), a wind sensor, a rain sensor, a barometric pressure sensor, a particulate matter sensor, an NO₂ sensor, a CO₂ sensor, and/or an acoustic sensor.

The temperature sensor can be an internal temperature sensor which is arranged in an LED driver or converter of the luminaire. For instance, this temperature sensor can measure the temperature in the vicinity of the luminaire directly after the luminaire is activated, e.g., directly after an LED module of the luminaire is switched on.

In an implementation form, the at least one sensor comprises an accelerometer which is configured to sense the weather condition, in particular a hailing, based on a characteristic movement of at least a part of the outdoor luminaire under said condition. This achieves the advantage that the weather condition can be detected in an efficient manner by a relatively low-cost and energy efficient sensor.

In an implementation form, the at least one sensor comprises one or more MEMS sensors. This achieves the advantage that the sensors can be compact, as well as energy and cost efficient.

In an implementation form, the at least one sensor is arranged in or on a housing of the respective outdoor luminaire.

For instance, the at least one sensor can be an internal sensor of the luminaire.

In an implementation form, the communication interface is a wireless communication interface, in particular a GSM interface. This achieves the advantage that the sensor data can be forwarded to the central unit in an efficient manner using a cellular network.

In an implementation form, the communication interface is configured to forward the data together with a unique identifier of the outdoor luminaire to the central unit. This achieves the advantage that each data which is received at the central unit can be allocated to a specific luminaire and thus a specific location of said luminaire in the geographic area.

In an implementation form, the central unit is configured to determine a distribution of at least one of the weather and/or environmental conditions over the geographical area based on the data from the plurality of outdoor luminaires. This achieves the advantage that the weather and/or environmental conditions can be recorded with a high spatial resolution.

For example, the central unit correlates the sensor data received from each luminaire with the location of the luminaire. This correlation can be performed based on the unique luminaire identifier (ID) that is transmitted by the luminaires together with the data.

In an implementation form, the central unit is configured to generate and/or update a map which visualizes the distribution of the at least one weather and/or environmental conditions over the geographical area.

The map can be a heat map. The heat map can show the distribution and/or the intensity of certain weather conditions, e.g. temperature and/or rain, or of environmental conditions, e.g. NO₂ concentration, in the geographical area. The map can be updated in real-time based on the data collected by the sensors of the luminaires and received by the central unit.

In an implementation form, the central unit is configured to control a traffic system based on the data from the plurality of luminaires.

For example, the central unit is configured to control the traffic system to adapt a speed limit in a street based on at least one of the weather and/or environmental conditions, in particular a noise level and/or a particulate matter pollution. For instance, this condition was sensed by at least one of the outdoor luminaires which is arranged adjacent to said street.

For example, the central unit can control the traffic system to decrease the speed limit if a fine dust pollution or a noise level sensed by a luminaire at a determined location exceeds a threshold value.

In addition or alternatively, the central unit can also take weather conditions into account when controlling the traffic system. For instance, the central unit can control the traffic system to reduce the speed limit in a certain region of the geographical area if a certain weather condition (e.g., snow or fog) is detected in said region.

In an implementation form, the central unit is configured to detect a hazardous situation, in particular a threatening weather condition or an environmental health hazard, in the geographical area based on the data from the plurality of luminaires; wherein the central unit is configured to issue a warning signal and/or a warning message when the hazardous situation was detected.

According to a second aspect, the present invention relates to a method for operating a lighting infrastructure system, in particular the lighting infrastructure system according to the first aspect of the invention, wherein the lighting infrastructure system comprises a plurality of outdoor luminaires which are arranged distributed over a geographical area, in particular an urban and/or a rural area. The method comprises: sensing one or more weather and/or environmental conditions with at least one sensor of each of the plurality of outdoor luminaires, and transmitting data representing the one or more sensed weather and/or environmental conditions from the respective outdoor luminaires to a central unit.

### BRIEF DESCRIPTION OF THE DRAWINGS

Exemplary embodiments of the invention are now further explained with respect to the drawings by way of example only, and not for limitation. In the drawings:
- Fig. 1: shows a schematic diagram of a lighting infrastructure system according to an embodiment;
- Fig. 2: shows a schematic diagram of a lighting infrastructure system comprising streetlights according to an embodiment; and
- Fig. 3: shows a flow diagram of a method for operating a lighting infrastructure system according to an embodiment.

### DETAILED DESCRIPTION OF EMBODIMENTS

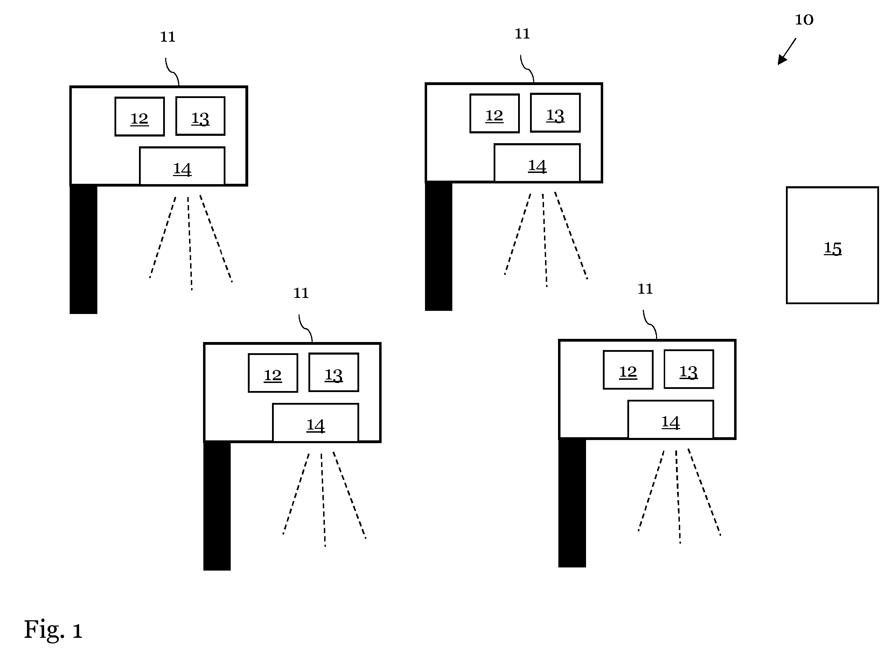

Fig. 1 shows a schematic diagram of a lighting infrastructure system 10 according to an embodiment.

The lighting infrastructure system 10 comprises a plurality of outdoor luminaires 11 which are arranged distributed over a geographical area and a central unit 15. Each of the plurality of outdoor luminaires 11 comprises: at least one sensor 12 configured to sense one or more weather and/or environmental conditions, and a communication interface 13 configured to transmit data representing the one or more sensed weather and/or environmental conditions to the central unit 15.

The outdoor luminaires 11 can be arranged in a grid across the geographical area. For instance, the outdoor luminaires 11 are streetlights.

In this way, a grid of outdoor luminaire, in particular streetlights, which are typically only used for illuminating streets and other paths in the geographical area, can double as a tight-meshed sensor network for weather and/or environmental sensing. This allows collecting sensor data of the weather and/or environmental conditions with high spatial resolution.

Notwithstanding, there could be additional outdoor luminaires, e.g. streetlights, arranged in the geographical area which do not comprise any weather and/or environmental sensors. For instance, every Nth (e.g., every 5^{th} or 10^{th}) streetlight in a network of streetlight is a component of the lighting infrastructure system 10 and comprises at least one sensor 12, while the remaining streetlights in the area do not comprise a respective sensor.

The geographical area can comprise an urban area and/or a rural area or a part of such an area. In particular, the geographical area is an area with a road network that is at least in part illuminated by the outdoor luminaires 11, e.g., in the form of streetlights.

For instance, the outdoor luminaires 11 are LED based luminaires which comprises one or more LED modules 14 and an LED gear, e.g. an LED driver and/or converter, for supplying the LED module(s) 14.

The sensor(s) 12 and/or the communication interface 13 of each outdoor luminaire 11 can be connected to a power supply of the outdoor luminaire, which is also used to provide electrical power to the LED module 14.

The communication interface 13 of each luminaire 11 can be a wireless communication interface, in particular a 2G or more specifically a GSM interface. Alternatively, the communication interface could be a 3G interface (e.g., UMTS), a 4G, interface, a 5G interface, or a different type of cellular network interface. In this way, the outdoor luminaires 11 can efficiently forward the data to the central control unit 15 using a cellular network.

However, the communication interface 13 could also be another type of wireless interface, e.g. a Bluetooth, a Bluetooth-Mesh, a LoRa or a Zigbee interface. For instance, the communication technology used for the interface 13 depends on the spacing between the luminaires 11 and the central control unit 15. In case of a mesh network (e.g., Bluetooth Mesh), for instance, only the distance between the different luminaires 11 of the mash matters (and the distance from one luminaire, e.g. at the end of the street, to the central unit), as the data can be communicated from luminaire to luminaire.

In principle, the communication interface 13 could also be a wire-bound interface.

The data transmitted to the control unit 15 by the individual luminaires 11 can comprise the raw sensor data collected by the at least one sensor 12 or can comprise data, which is based on the raw sensor data, and which was further processed in the luminaire 11, e.g. by a controller of the luminaire.

For instance, the one or more weather conditions can comprise one, more or all of: a current temperature, a temperature cycle, a humidity, an air pressure, a wind speed, and a certain weather phenomenon, such as rain, snow or hail.

Furthermore, the one or more environmental conditions can comprise one, more or all of: a particulate matter pollution, e.g. a fine dust pollution, an audible noise level, and an NO₂ (nitrogen dioxide) concentration.

Accordingly, the at least one sensor 15 can comprise: a temperature sensor, a humidity sensor, a wind sensor, a rain sensor, a barometric pressure sensor, a particulate matter sensor, an NO₂ sensor, and/or an acoustic sensor. The acoustic sensor can comprise a microphone.

For instance, a high noise level as well as a high particulate matter and NO₂ level could be caused by a high volume of traffic which regularly occurs at certain times of the day in certain parts of the geographic area, e.g., along a busy road.

The at least one sensor 12 can be arranged in or on a housing of the respective outdoor luminaire 11. It is also possible that an outdoor luminaire 11 of the system comprises a plurality of different weather and/or environmental sensor, wherein some sensors are covered by a luminaire housing while other sensors are arranged on the luminaire housing.

The at least one sensor 12 can comprise internal sensors of the luminaire, i.e. sensors which are also used for monitoring a parameter of the luminaire, or external sensors which are only used for sensing the weather and/or environmental condition.

Such an internal sensor is, e.g., a temperature sensor which is arranged in an LED gear, e.g. a driver or converter, of the luminaire 11. This For instance, this temperature sensor can measure the temperature in the vicinity of the luminaire 11 directly after the luminaire is activated. This temperature can be estimated to correspond to the ambient temperature.

An example of an external sensor which is specifically added to a luminaire 11 for weather condition monitoring is an accelerometer. This accelerometer can be configured to detect a weather condition based on a characteristic movement of the outdoor luminaire or a part thereof under said weather condition. This weather condition could be a rainfall, a hailing or a wind.

For instance, when a hail corn hits the luminaire, the accelerometer shows a spike in a sensed acceleration (e.g. in a z-axis). These spikes can be detected and/or evaluated by a microcontroller of the luminaire 11 in order to conclude that it is hailing at the location of the luminaire. In a similar manner, the accelerometer be used to detect rain or wind based on characteristic movements of the luminaire 11 under these weather conditions.

The accelerometer can be arranged below a cover or housing of the outdoor luminaire 11, wherein a movement of said cover or housing can be sensed by the accelerometer.

The sensors 12 could also comprise means to measure a snow load on a luminaire cover or housing. For instance, knowing how much snow has fallen in different areas of a city can be useful information, e.g., to better plan snow cleaning activities.

It is also possible that the type of the at least one sensor 12 and/or the sensed weather respectively environmental parameter varies across the plurality of outdoor luminaires 11 of the system 10. For instance, some luminaires 11 can be equipped with a rain sensor while other luminaires are instead equipped with a wind sensor.

The at least one sensor 12 can comprise one or more MEMS sensors. For instance, a MEMS sensor could be arranged on a PCB of the luminaire 11 or more specifically on a PCB of an LED gear of the luminaire 11.

The central unit 15 can be configured to receive and process the data from the plurality of outdoor luminaires 11.

The central unit 15 can be a central computing device or unit, e.g. a server, or another central instance, such as a central controller. The central unit 15 can comprise or be connected to a corresponding communication interface configured to receive the data transmitted by the communication interfaces 13 of the outdoor luminaires 11. In this way, the central unit 15 can collect the sensing data of all luminaires 11.

The central unit 15 can be arranged remote to the outdoor luminaries. Alternatively, the central unit 15 could also be integrated in one of the outdoor luminaires 11 of the lighting infrastructure system 10.

For instance, each outdoor luminaire 11 respectively its communication interface 13 is configured to forward the data to the central unit 15 together with a unique identifier of the luminaire 11.

By means of this unique identifier (short: ID), the central unit 15 can correlate the individual data with the respective luminaire 11 that collected said data. The location of each outdoor luminaire 11 can be known to the central unit 11. Thus, by means of the unique identifier, the central unit 15 can also correlate the weather and/or environmental data to the respective locations in the area where the data was collected. In this way, the central unit 15 can determine weather and/or the environmental conditions at different locations in the area in a spatially resolved manner.

For example, the central unit 15 is configured to determine a distribution of at least one of the one or more weather and/or environmental conditions over the geographical area based on the received data.

The central unit 15 can further be configured to generate and/or update a map visualizing the distribution of the weather and/or environmental conditions over the geographical area. The map could be updated in real-time based on the data which is continuously collected by the sensors of the luminaires 11 and forwarded to the central unit 15.

For instance, the central unit 15 can generate a heat map based on the data, wherein the heat map shows, e.g., temperature or rain distributions in the geographical area (e.g., an urban area). The map could further be used to monitor particulate matter (e.g., PM₁₀ and/or PM_{2.5}) or audible noise pollution near certain infrastructure (e.g., streets or factories).

Another application would be to provide a fine-meshed real-time map which shows a current development of the weather and/or environmental conditions. For instance, the map shows where in the area it is raining (or even haling), and where not. On the map one could see where it started raining / hailing and how the rain / hailstorm distributes - e.g. hail started in the east of the city and more and more comes towards west.

This real-time monitoring of weather and/or environmental conditions could be used for informing people and/or facilities in the area. For instance, in the aforementioned example, people in the west part of the city could be warned about the approaching hail, which can prompt them to prepare for this weather event, e.g. drive their cars in a garage, close their windows, etc.

Furthermore, the central unit 15 can be configured to detect a hazardous situation in the geographical area based on the data received from the plurality of luminaires 11. The hazardous situation could be a certain weather phenomenon (e.g., a storm) or an environmental health hazard (e.g., a high concentration of atmospheric particulate matter (e.g., PM₁₀ and/or PM_{2.5} particles). In response to the detection of such a hazardous situation, the central unit 15 could issue a warning signal and/or a warning message. This signal and/or message could be issued specifically to people / facilities in parts of the geographic area, where the hazardous situation is likely to occur or is already occurring.

For instance, the central unit 15 can send the warning message via cell broadcast or similar technology to all mobile phones located in a hazardous region within the geographical area.

In addition or alternatively, the central unit 15 could also use the received data to create weather forecasts with high accuracy. The central unit 15 could further use the monitored weather and/or environmental conditions for other purposes, such as climate protection, sustainability or big data / machine learning.

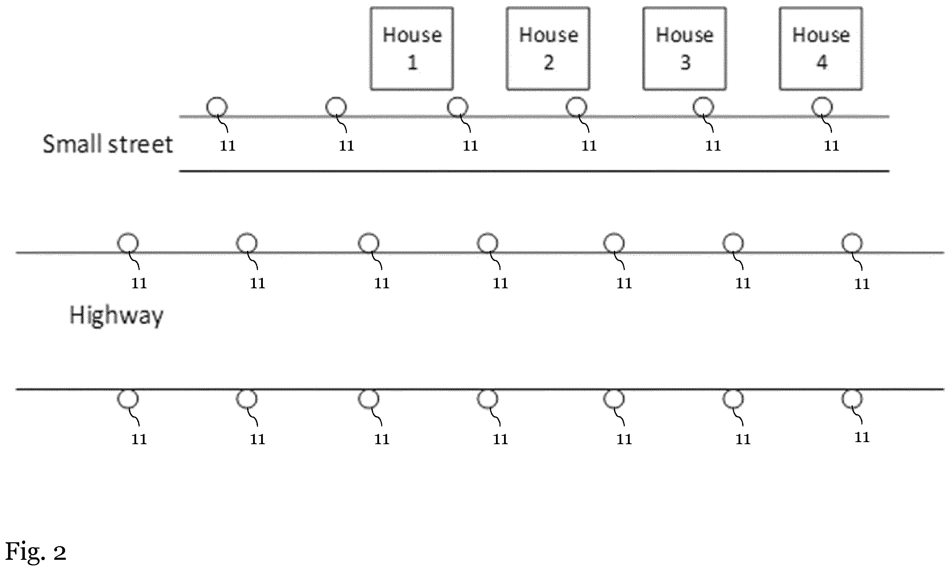

Fig. 2 shows a schematic diagram of the lighting infrastructure system 10 according to an embodiment. In the example shown in Fig. 2, the outdoor luminaires 11 of the system 10 are streetlights which are arranged along a smaller street, e.g. in a residential area, and along a highway.

The central unit 15 (not shown in Fig. 2) could be configured to control a traffic system based on the data received from at least some of the streetlights 11. For instance, the traffic system controls a speed limit along the small street or the highway.

For example, the central unit is configured to control the traffic system to adapt a speed limit on the street (e.g., on the highway) dynamically based on at least one weather and/or environmental condition, in particular a noise level and/or a particulate matter pollution, sensed by the sensors 12 of at least some of the streetlights 11. For instance, a maximum speed limit on the highway or the small street could be occasionally reduced due to audible noise pollution affecting the people living in the houses 1 to 4.

For instance, the luminaires 11, i.e. streetlights, comprise audible noise sensors and a wireless interface 13. The central unit 15 can track the audible noise intensity difference between the highway luminaires and the small street luminaires. Depending on the weather conditions (e.g., temperature, humidity, wind direction and speed, etc.) this difference will be higher or lower (this means: sometimes people in house 1 hear cars driving on the highway louder and sometimes less loud - depending on the weather). Knowing this difference can be used to control a dynamic speed limit on the highway. For instance, on days / times where the noise is more attenuated (i.e., people hear it less) the cars can be allowed to drive faster, while during times with less attenuation the maximum speed limit is reduced.

Besides noise level, the central unit 15 can control the traffic system based on other factors, such as particulate matter or NO₂ pollution. For instance, the speed limit along a certain street could be reduced when a detected concentration of particulate matter or NO₂ in the atmosphere next to the street exceeds a threshold value.

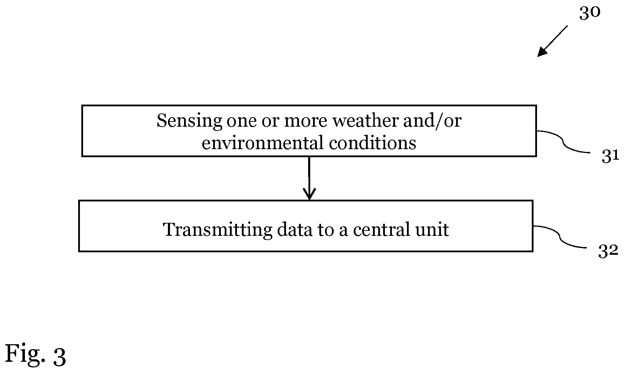

Fig. 3 shows a flow diagram of a method 30 for operating a lighting infrastructure system 10 according to an embodiment. The method 30 can be used to operate the lighting infrastructure system 10 as, e.g., shown in Figs. 1 and 2, which comprises the plurality of outdoor luminaires 11 which are arranged distributed over the geographical area, in particular an urban and/or a rural area.

The method 30 comprises the steps of: sensing 31 one or more weather and/or environmental conditions with at least one sensor 12 of each of the plurality of outdoor luminaires 11, and transmitting 32 data representing the one or more sensed weather and/or environmental conditions from the respective outdoor luminaires 11 to the central unit 15.

Although the invention has been illustrated and described with respect to one or more implementations, equivalent alternations and modifications will occur to those skilled in the art upon the reading and understanding of this specification and the annexed drawings. In addition, while a particular feature of the invention may have been disclosed with respect to only one of the several implementations, such features may be combined with one or more other features of the other implementations as may be desired and advantageous for any given or particular application.

## Claims

1. A lighting infrastructure system (10), comprising:
a plurality of outdoor luminaires (11) which are arranged distributed over a geographical area, in particular an urban and/or a rural area; and
a central unit (15);
wherein each of the plurality of outdoor luminaires (11) comprises:
- at least one sensor (12) configured to sense one or more weather and/or environmental conditions, and
- a communication interface (13) configured to transmit data representing the one or more sensed weather and/or environmental conditions to the central unit (15).

2. The system (10) of claim 1,
wherein the one or more weather conditions comprise: a current temperature, a temperature cycle, a humidity, an air pressure, a wind speed, and/or a certain weather phenomenon, in particular rain, snow or hail.

3. The system (10) of claim 1 or 2,
wherein the one or more environmental conditions comprise: a particulate matter pollution, an audible noise level, an NO₂ concentration, and/or a CO₂ concentration.

4. The system (10) of any one of the preceding claims,
wherein the at least one sensor (12) comprises: a temperature sensor, a humidity sensor, a wind sensor, a rain sensor, a barometric pressure sensor, a particulate matter sensor, an NO₂ sensor, a CO₂ sensor, and/or an acoustic sensor.

5. The system (10) of any one of the preceding claims,
wherein the at least one sensor (12) comprises an accelerometer which is configured to sense the weather condition, in particular a hailing, based on a characteristic movement of at least a part of the outdoor luminaire (11) under said condition.

6. The system (10) of any one of the preceding claims,
wherein the at least one sensor (12) comprises one or more MEMS sensors.

7. The system (10) of any one of the preceding claims,
wherein the at least one sensor (12) is arranged in or on a housing of the respective outdoor luminaire (11).

8. The system (10) of any one of the preceding claims,
wherein the communication interface (13) is a wireless communication interface.

9. The system (10) of any one of the preceding claims,
wherein the communication interface (13) is configured to forward the data together with a unique identifier of the outdoor luminaire (11) to the central unit (15).

10. The system (10) of any one of the preceding claims,
wherein the outdoor luminaires (11) are streetlights.

11. The system (10) of any one of the preceding claims,
wherein the central unit (15) is configured to determine a distribution of at least one of the weather and/or environmental conditions over the geographical area based on the data from the plurality of outdoor luminaires (11).

12. The system (10) of claim 11,
wherein the central unit (15) is configured to generate and/or update a map which visualizes the distribution of the at least one weather and/or environmental conditions over the geographical area.

13. The system (10) of any one of any one of the preceding claims,
wherein the central unit (15) is configured to control a traffic system based on the data from the plurality of outdoor luminaires (11).

14. The system (10) of claim 13,
wherein the central unit (15) is configured to control the traffic system to adapt a speed limit in a street based on at least one of the weather and/or environmental conditions, in particular a noise level and/or a particulate matter pollution.

15. The system (10) of any one of the preceding claims,
wherein the central unit (15) is configured to detect a hazardous situation, in particular a threatening weather condition or an environmental health hazard, in the geographical area based on the data from the plurality of luminaires (11); and
wherein the central unit (15) is configured to issue a warning signal and/or a warning message when the hazardous situation was detected.

16. A method (30) for operating a lighting infrastructure system (10), in particular the lighting infrastructure system (10) of any one of the preceding claims, wherein the lighting infrastructure system (10) comprises a plurality of outdoor luminaires (11) which are arranged distributed over a geographical area, in particular an urban and/or a rural area, the method (30) comprising:
- sensing (31) one or more weather and/or environmental conditions with at least one sensor (12) of each of the plurality of outdoor luminaires (11), and
- transmitting (32) data representing the one or more sensed weather and/or environmental conditions from the respective outdoor luminaires (11) to a central unit (15).
